# EUROPÄISCHE PATENTSCHRIFT

(11) **EP 1 087 587 B1**
(45) Veröffentlichungstag und Bekanntmachung des Hinweises auf die Patenterteilung: **02.11.2005**
(21) Anmeldenummer: 00117142.0
(22) Anmeldetag: 10.08.2000
(51) Int. Cl.: H04L 27/36, H04L 7/04, H04L 25/03

(54) **Verfahrung zur Messung mindestens einer Eigenschaft eines Übertragungskanals und Sende-Empfangsstationen zur Durchführung des Verfahrens**
Method for measuring at least one characteristic of a transmission channel, transmitter and receiver using this method
Procédé pour la mesure d'au moins une caractéristique d'un canal de transmission, émetteur et récepteur utilisant ce procédé

(30) Priorität: 22.09.1999 DE 19945273
(43) Veröffentlichungstag der Anmeldung: 28.03.2001
(73) Patentinhaber: ROBERT BOSCH GMBH, 70442 Stuttgart (DE)
(72) Erfinder: Hans, Martin, 31141 Hildesheim (DE); Kowalewski, Frank, 38228 Salzgitter (DE); Laumen, Josef, 31141 Hildesheim (DE); Schmidt, Gunnar, 38304 Wolfenbuettel (DE); Mangold, Peter, 30173 Hannover (DE); Baer, Siegfried, 75179 Pforzheim (DE); Beckmann, Mark, 31789 Hameln (DE)

(56) Entgegenhaltungen:
- EP-A- 0 411 463
- EP-A- 0 593 186
- EP-A- 0 806 852
- DE-A- 19 850 279
- ZHUANG W ET AL: "ADAPTIVE CHANNEL PRECODING FOR PERSONAL COMMUNICATIONS" ELECTRONICS LETTERS,GB,IEE STEVENAGE, Bd. 30, Nr. 19, 15. September 1994 (1994-09-15), Seiten 1570-1571, XP000466446 ISSN: 0013-5194

## Beschreibung

Die Erfindung geht von einem Verfahren zur Messung mindestens einer Eigenschaft eines Übertragungskanals und von Sende-/Empfangsstationen zur Durchführung dieses Verfahrens nach der Gattung der unabhängigen Ansprüche aus.

### Stand der Technik

Aus der EP 0411 463 A1 ist ein digitales Übertragungssystem bekannt. Das digitale Übertragungssystem umfasst zwei Endstellen und eine Übertragungsstrecke zwischen den Endstellen, deren Empfangsteil Einrichtungen zur Entzerrung von Signalverzerrungen der Übertragungsstrecke enthält. Zur Verbesserung der Übertragungsqualität und Reichweite des Übertragungssystems und Erreichung eines einfachen Aufbaus sieht die erfindungsgemäße Lösung in lediglich einer Endstelle im Empfangsteil eine Einrichtung zur Entzerrung des Empfangssignals und im Sendeteil einen Vorverzerrer vor. Der Vorverzerrer wird durch ein vom Entzerrer abgeleitetes Signal derart angesteuert, dass das zur Gegenstation gesendete Signal entsprechend der Übertragungsstrecke vorverzerrt wird. Bei Mobilfunksystemen sind Entzerrer und Vorverzerrer in der Feststation angeordnet.

Aus der EP 0593 186 A1 ist ein Kanalentzerrer für ein Telekommunikationssystem bekannt. Die Kanalentzerrerfaktoren in einem Kommunikationssystem können in einer Basisstation berechnet werden und zu einer Mobilstation übertragen werden, um die Entzerrung beim Empfang durchzuführen. Alternativ kann die Kanalentzerrung in der Basisstation auch in Verbindung mit der Übertragung zur Mobilstation zusätzlich zur herkömmlichen Entzerrung bei Empfang durchgeführt werden. Die Herstellung der Mobilstation wird vereinfacht, wenn der Kanalentzerrer oder die Berechnung der Entzerrungsfaktoren weggelassen werden kann.

Aus der Veröffentlichung "RRC Protocol Specification", TS 25.331 v.1.1.0, 3 GPP TSG RAN WG 1 ist es bereits bekannt, Signalisierungsinformationen zwischen einer Basisstation und einer Mobilstation zu übertragen, um mindestens einen Übertragungskanal zwischen der Basisstation und der Mobilstation einzurichten, der speziell einem Datenaustausch zwischen der Basisstation und der Mobilstation gewidmet ist. Für einen solchen Übertragungskanal kann die Impulsantwort geschätzt und die geschätzte Impulsantwort zur Vorverzerrung des zu sendenden Signals verwendet werden, so dass in der empfangenden Station Mittel zur Entzerrung eingespart werden können. Ein solches Verfahren zur Vorverzerrung ist das aus der Veröffentlichung "Summary of Joint Predestortion", TSG-RAN WG 1 bekannte Joint Predistortion Verfahren. Beim Joint Predistortion Verfahren wird in der Basisstation eine Vorverzerrung der zu sendenden Signale vorgenommen. Diese Vorverzerrung ist an den Übertragungskanal für die Übertragung von Daten von der Basisstation zur Mobilstation angepaßt. Dadurch wird der Aufwand für Empfang, Detektion und Dekodierung der Signale in der Mobilstation möglichst gering gehalten. Um das Joint Predestortion (JP)-Verfahren effizient betreiben zu können, ist an der Basisstation eine genaue Kenntnis der Eigenschaften des Übertragungskanals von der Basisstation zur Mobilstation unabdingbar. Da in einem TDD-Modus (Time Division Duplex) kein Frequenzunterschied zwischen dem Übertragungskanal für die Übertragungsstrecke von der Basisstation zur Mobilstation, der im folgenden auch als Downlink-Kanal bezeichnet wird, und dem Übertragungskanal für die Übertragungsstrecke von der Mobilstation zur Basisstation, der im folgenden auch als Uplink-Kanal bezeichnet wird, auftritt, kann die Messung einer oder mehrerer Eigenschaften des Uplink-Kanals als Schätzung für entsprechende Eigenschaften des Downlink-Kanals herangezogen werden. Anhand der Schätzung wird dann in der Basisstation eine Vorverzerrung der über den Downlink-Kanal zur Mobilstation zu sendenden Daten durchgeführt, die dazu führt, daß die über den Downlink-Kanal zur Mobilstation zu sendenden Signale an der Mobilstation im wesentlichen unverzerrt ankommen, so daß wie beschrieben der Aufwand für Empfang, Detektion und Dekodierung der Signale in der Mobilstation reduziert werden kann.

Die Eigenschaften des Uplink-Kanals werden anhand der über den Uplink-Kanal von der Mobilstation zur Basisstation gesendeten Daten gemessen. Einige Eigenschaften eines solchen Übertragungskanals können durch dessen Impulsantwort beschrieben werden, so daß eine Schätzung für die Eigenschaften des Downlink-Kanals am besten durch eine Schätzung der Impulsantwort des Downlink-Kanals vorgenommen wird.

Voraussetzung für eine gute Schätzung ist, daß sich die Impulsantwort des Downlink-Kanals vom Zeitpunkt der Messung der Eigenschaften bzw. der Impulsantwort des Uplink-Kanals aus den über den Uplink-Kanal gesendeten Daten bis zum Zeitpunkt für das Versenden der vorverzerrten Daten über den Downlink-Kanal möglichst wenig verändert.

Veränderungen der Impulsantwort des Downlink-Kanals sind insbesondere von der Geschwindigkeit, mit der sich die Mobilstation relativ zur Basisstation bewegt, abhängig. Je schneller sich eine Mobilstation relativ zur Basisstation bewegt, desto schneller ändern sich die Eigenschaften des Uplink-Kanals und des Downlink-Kanals und umso häufiger müssen Messungen der Eigenschaften des Uplink-Kanals vorgenommen werden, um eine möglichst gute Schätzung der Eigenschaften des Downlink-Kanals zu erhalten.

In einem Mobilfunksystem nach dem UMTS-Standard (Universal Mobile Telecommunications System) besteht nun das Problem, daß zwischen dem Zeitpunkt für den Aufbau bzw. für die Konfiguration einer Verbindung zwischen der Mobilstation und der Basisstation und dem Zeitpunkt für das erstmalige Versenden von Daten über den Uplink-Kanal dieser Verbindung eine nicht näher spezifizierte Zeit verstreichen kann. Außerdem ist nicht sichergestellt, daß regelmäßig Signale über den Uplink-Kanal von der Mobilstation zur Basisstation gesendet werden. Dies ist jedoch zumindest für eine Vorverzerrung nach dem JP-Verfahren unabdingbar, um in der Basisstation eine möglichst gut an die Impulsantwort des Downlink-Kanals angepaßte JP-Vorverzerrung durchführen zu können.

Überschreitet eine Sendepause zwischen dem Versenden zweier Datensignale über den Uplink-Kanal eine bestimmte Dauer, die abhängig von der Geschwindigkeit der Mobilstation relativ zur Basisstation ist, so verliert die Messung der Eigenschaften des Uplink-Kanals ihre Gültigkeit als brauchbare Schätzung für die Eigenschaften des Downlink-Kanals.

### Vorteile der Erfindung

Das erfindungsgemäße Verfahren zur Messung mindestens einer Eigenschaft eines Übertragungskanals und die Sende-/Empfangsstationen mit den Merkmalen der unabhängigen Ansprüche haben demgegenüber den Vorteil, daß zu vorgegebenen regelmäßigen Zeiten jeweils ein Meßsignal über den Übertragungskanal von der mindestens einen ersten Sende-/Empfangsstation zur zweiten Sende-/Empfangsstation übertragen wird, anhand dessen die Messung der mindestens einen Eigenschaft des Übertragungskanals in der zweiten Sende-/Empfangsstation durchgeführt wird. Auf diese Weise kann durch entsprechende Vorgabe dieser Zeiten gewährleistet werden, daß die auf der Grundlage der Messung der mindestens einen Eigenschaft des Übertragungskanals durchgeführte Aufbereitung der von der zweiten Sende-/Empfangsstation zu sendenden Daten ausreichend aktuell ist, so daß die Aufbereitung auch tatsächlich an die entsprechende Eigenschaft oder an die entsprechenden Eigenschaften eines für die Übertragung der zu sendenden Daten von der zweiten Sende-/Empfangsstation zu der mindestens einen ersten Sende-/Empfangsstation eingerichteten Downlink-Kanals angepaßt ist. Die Messung der mindestens einen Eigenschaft des Übertragungskanals von der mindestens einen ersten Sende-/Empfangsstation zur zweiten Sende-/Empfangsstation, der einen Uplink-Kanal darstellt, ist somit für die Schätzung der entsprechenden Eigenschaft oder der entsprechenden Eigenschaften des Downlink-Kanals aussagekräftig und somit brauchbar. Durch entsprechende Vorgabe der Zeiten für die Übertragung jeweils eines Meßsignals über den Uplink-Kanal kann verhindert werden, daß die Sendepause zwischen dem Versenden zweier Signale auf dem Uplink-Kanal eine Zeitdauer überschreitet, in der die Messung der mindestens einen Eigenschaft des Uplink-Kanals ihre Gültigkeit als brauchbare Schätzung für die entsprechende Eigenschaft oder die entsprechenden Eigenschaften des Downlink-Kanals dadurch verliert, daß sich diese Eigenschaft oder diese Eigenschaften nach Überschreitung dieser Zeitdauer zu sehr ändern.

Auf diese Weise kann sichergestellt werden, daß in der zweiten Sende-/Empfangsstation sowohl direkt nach dem Aufbau eines Downlink-Kanals als auch während der gesamten eingerichteten Verbindung zu der mindestens einen ersten Sende-/Empfangsstation stets eine gültige Schätzung aus der mindestens einen Eigenschaft des Uplink-Kanals für den Downlink-Kanal vorliegt.

Durch die in den Unteransprüchen aufgeführten Maßnahmen sind vorteilhafte Weiterbildungen und Verbesserungen des Verfahrens zu Messung mindestens einer Eigenschaft eines Übertragungskanals und der Sende-/Empfangsstationen gemäß den unabhängigen Ansprüchen möglich.

Besonders vorteilhaft ist es, daß die Zeiten für die Übertragung der Meßsignale der mindestens einen ersten Sende-/Empfangsstation von der zweiten Sende-/Empfangsstation mitgeteilt werden. Auf diese Weise kann die zweite Sende-/Empfangsstation die für eine Anpassung der Aufbereitung der zu sendenden Daten an die entsprechende Eigenschaft oder die entsprechenden Eigenschaften des eingerichteten Downlink-Kanals erforderlichen Meßsignale in der erforderlichen Häufigkeit von der mindestens einen ersten Sende-/Empfangsstation anfordern.

Ein weiterer Vorteil besteht darin, daß die Zeiten für die Übertragung der Meßsignale in Abhängigkeit der zeitlichen Änderung der mindestens einen Eigenschaft des Übertragungskanals vorgegeben werden. Auf diese Weise kann gewährleistet werden, daß Meßsignale in ausreichender Häufigkeit über den Übertragungskanal zur zweiten Sende-/Empfangsstation übertragen werden, so daß die zeitliche Änderung der mindestens einen Eigenschaft des Übertragungskanals bei der Aufbereitung der zu sendenden Daten berücksichtigt werden kann.

Besonders vorteilhaft ist es, daß in mindestens einem Zeitschlitz, der vorzugsweise von Nutz- und Signalisierungsdaten frei ist, Meßsignale von mehreren ersten Sende-/Empfangsstationen zeitmultiplex zur zweiten Sende-/Empfangsstation übertragen werden. Auf diese Weise läßt sich Bandbreite für die Übertragung der Meßsignale einsparen.

Ein wesentlicher Bestandteil der Erfindung ist, daß die Zeiten für die Übertragung der Meßsignale derart vorgegeben werden, daß eine regelmäßige Übertragung von Meßsignalen durchgeführt wird. Dies ist besonders dann von Vorteil, wenn Sendepausen zwischen dem Versenden zweier Signale auf dem Uplink-Kanal auftreten. Durch die regelmäßige Übertragung der Meßsignale wird die erforderliche Aktualisierung der Aufbereitung der von der zweiten Sende-/Empfangsstation zu sendenden Daten auch und vor allem in solchen Sendepausen gewährleistet, in denen normalerweise keine Signale über den Uplink-Kanal übertragen werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild einer erfindungsgemäßen ersten Sende-/Empfangsstation und einer erfindungsgemäßen zweiten Sende-/Empfangsstation, Figur 2 einen Übertragungskanal in einem Zeitschlitz Multiplex-Übertragungssystem und Figur 3 eine von einer Basisstation aufgespannte Funkzelle mit darin angeordneten Mobilstationen.

### Beschreibung des Ausführungsbeispiels

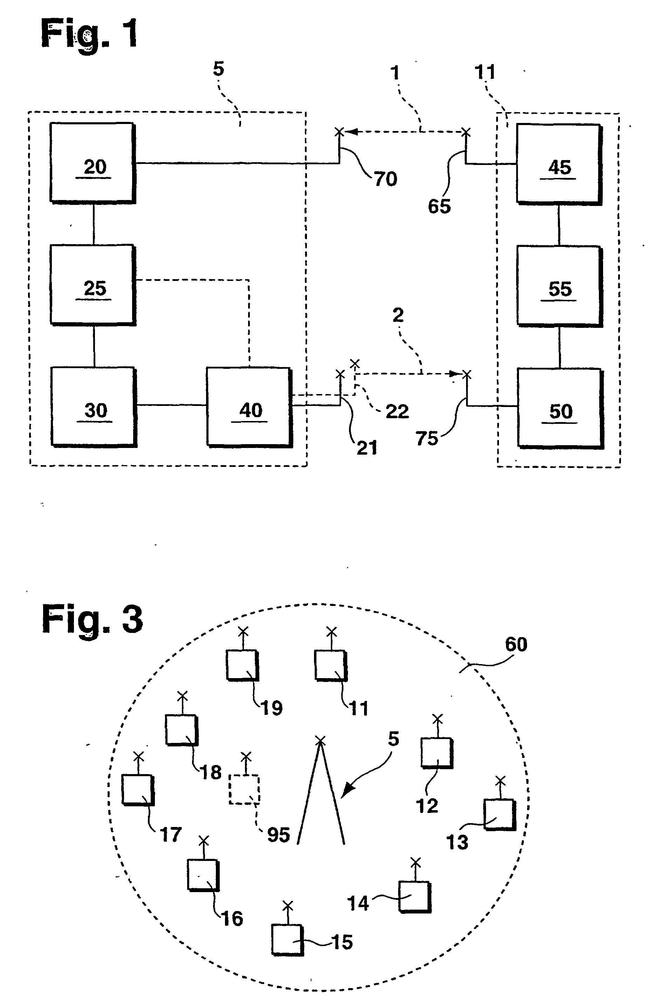

In Figur 1 kennzeichnet 11 eine erste Sende-/Empfangsstation, die beispielsweise als Mobilstation ausgebildet und zur Funktion in einem Mobilfunknetz vorgesehen sein kann. Bei einer solchen Mobilstation kann es sich beispielsweise um ein Mobiltelefon nach dem GSM-Standard (Global System for Mobile Telecommunications) oder nach dem UMTS-Standard (Universal Mobile Telecommunications System) handeln. Im folgenden soll der Fall angenommen werden, daß es sich bei der ersten Sende-/Empfangsstation 11 um eine Mobilstation handelt. Weiterhin ist in Figur 1 eine zweite Sende-/Empfangsstation 5 dargestellt, die beispielsweise als Basisstation des genannten Mobilfunknetzes ausgebildet sein kann und ebenfalls beispielsweise nach dem GSM-Standard oder nach dem UMTS-Standard ausgebildet sein kann. Im folgenden soll dabei der Fall angenommen werden, daß die zweite Sende-/Empfangsstation 5 als Basisstation ausgebildet ist. Die Basisstation 5 spannt dabei gemäß Figur 3 eine Funkzelle 60 im Mobilfunknetz auf. Gemäß Figur 3 bewegen sich in dieser Funkzelle 60 neun Mobilstationen 11, 12, 13, ..., 19. Diese Zahl ist beispielhaft gewählt, es können auch mehr oder weniger Mobilstationen in der Funkzelle 60 angeordnet sein.

Der Aufbau der Mobilstationen 11, 12, 13, ..., 19 soll beispielhaft anhand der in Figur 1 dargestellten ersten Sende-/Empfangsstation 11 erläutert werden, wobei die erste Sende-/Empfangsstation 11 eine erste der neun Mobilstationen 11, 12, 13, ..., 19 stellvertretend darstellt. Die Basisstation 5 umfaßt eine erste Empfangsantenne 70, die an eine erste Empfangseinheit 20 angeschlossen ist. Die erste Empfangseinheit 20 ist mit einer ersten Auswerteeinheit 25 verbunden. An die erste Auswerteeinheit 25 ist eine Aufbereitungseinheit 30 und eine erste Sendeeinheit 40 angeschlossen. Die Aufbereitungseinheit 30 ist außerdem mit der ersten Sendeeinheit 40 verbunden. An die erste Sendeeinheit 40 ist eine erste Sendeantenne 21 und optional eine zweite Sendeantenne 22 angeschlossen.

Die erste Mobilstation 11 umfaßt eine dritte Sendeantenne 65, die an eine zweite Sendeeinheit 45 angeschlossen ist. Die zweite Sendeeinheit 45 ist über eine zweite Auswerteeinheit 55 mit einer zweiten Empfangseinheit 50 verbunden. An die zweite Empfangseinheit 50 ist eine zweite Empfangsantenne 75 angeschlossen.

Die dritte Sendeantenne 65 und die zweite Empfangsantenne 75 können über eine in Figur 1 nicht dargestellte Antennenweiche auch zu einer kombinierten Sende-/Empfangsantenne zusammengefaßt sein. Auch die erste Sendeantenne 21 kann über eine in Figur 1 nicht dargestellte Antennenweiche mit der ersten Empfangsantenne 70 zu einer kombinierten Sende-/Empfangsantenne zusammengefaßt sein. Dasselbe gilt für die ggf. vorhandene zweite Sendeantenne 22 und eine ggf. vorhandene weitere Empfangsantenne der Basisstation 5, die in der beschriebenen Weise zu einer gemeinsamen Sende-/Empfangsantenne zusammengefaßt sein können.

Bei einem für die erste Mobilstation 11 eingehenden Ruf veranlaßt ein Netzbetreiber des Mobilfunknetzes über die Basisstation 5 den Aufbau einer Telekommunikationsverbindung zwischen dem rufenden Teilnehmer und der ersten Mobilstation 11. Dabei wird von der ersten Mobilstation 11 zur Basisstation 5 ein erster Übertragungskanal 1, der im folgenden auch als Uplink-Kanal bezeichnet wird, und von der Basisstation 5 zur ersten Mobilstation 11 ein zweiter Übertragungskanal 2, der im folgenden auch als Downlink-Kanal bezeichnet wird, eingerichtet. Der Uplink-Kanal 1 und der Downlink-Kanal 2 stellen dabei jeweils einen sogenannten gewidmeten Kanal dar, der nur für die Verbindung zwischen der Basisstation 5 und der ersten Mobilstation 11 aufgebaut wird. Die Einrichtung des Uplink-Kanals 1 und des Downlink-Kanals 2 wird von der Basisstation 5 initiiert und erfolgt auf der Grundlage eines Signalisierungsdatenaustauschs zwischen der Basisstation 5 und der ersten Mobilstation 11 auf Kanälen, die mehreren der Mobilstationen 11, 12, 13, ..., 19 in der Funkzelle 60 zugänglich sind. Ein solcher mehreren Mobilstationen zugänglicher Uplink-Kanal für die Übertragung von Signalisierungsdaten zur Basisstation 5 ist beispielsweise als RACH (Random Access Channel) ausgebildet. Ein entsprechend mehreren Mobilstationen zugänglicher Downlink-Kanal von der Basisstation 5 zu den einzelnen Mobilstationen kann hingegen beispielsweise als FACH (Forward Access Channel) ausgebildet sein. Der RACH und der FACH stellen dabei jeweils einen wahlfreien Zugriffskanal dar und sind beispielsweise für Mobilfunknetze nach dem GSM-Standard oder nach dem UMTS-Standard vorgesehen.

Im folgenden soll beispielhaft der Fall eines UMTS-Mobilfunksystems betrachtet werden, bei dem die Übertragungskanäle 1, 2 jeweils als Zeitschlitz ausgebildet sind. Auf diese Weise läßt sich ein sogenannter TDD-Betrieb (Time Division Duplex) realisieren, bei dem der Uplink-Kanal 1 und der Downlink-Kanal 2 in Form unterschiedlicher Zeitschlitze realisiert sind.

Es soll nun vorgesehen sein, die von der Basisstation 5 über den Downlink-Kanal 2 zur ersten Mobilstation 11 zu versendenden Daten in der Basisstation 5 so aufzubereiten, daß sie mit erhöhter Empfangsqualität an der ersten Mobilstation 11 empfangen werden. Auf diese Weise läßt sich dann der Aufwand für eine Entzerrung und Detektion der an der ersten Mobilstation 11 von der Basisstation 5 empfangenen Daten mit reduziertem Aufwand und somit stromsparend betreiben. Eine solche Aufbereitung kann auf mehrere verschiedene Arten in der Basisstation 5 erfolgen, wobei verschiedene Arten der Aufbereitung auch miteinander kombiniert werden können. Eine Art der Aufbereitung besteht darin, die von der Basisstation 5 an die erste Mobilstation 11 zu sendenden Signale über mehrere Sendeantennen 21, 22 abzustrahlen, um somit Fadingeinflüsse mittels Mehrwegeübertragung zu kompensieren.

Zusätzlich oder alternativ kann in der Aufbereitungseinheit 30 eine Vorverzerrung, beispielsweise nach einem Joint-Predistortion (JP)-Verfahren, wie es beispielsweise aus der genannten Veröffentlichung "Summary of Joint Predestortion" bekannt ist, der zu sendenden Signale durchgeführt werden. Die auf diese Weise vorverzerrten Signale werden bei ihrer Übertragung über den Downlink-Kanal 2 entsprechend der Impulsantwort des Downlink-Kanals 2 entzerrt und liegen an der zweiten Empfangseinheit 50 im wesentlichen unverzerrt vor. Die so empfangenen Daten können in der ersten Mobilstation 11 beispielsweise durch einfache Korrelationsentscheidung detektiert werden. Ohne Vorverzerrung würde die Übertragung der über den Downlink-Kanal 2 zu sendenden Daten zu einem gemäß der Impulsantwort des Downlink-Kanals 2 verzerrten Empfang an der zweiten Empfangseinheit 50 führen, so daß eine vergleichsweise aufwendige Entzerrung und Detektion, beispielsweise nach einem Joint Detection (JD)-Verfahren in der ersten Mobilstation 11 erforderlich wäre. Ein solches JD-Verfahren ist beispielsweise aus der Veröffentlichung "System - Description Performance Evaluation", Concept Group Delta WB-TDMA/CDMA, ETSI, SMG2 bekannt.

Eine Aufbereitung der zu sendenden Signale mittels Vorverzerrung setzt Kenntnisse über die Impulsantwort des Downlink-Kanals 2 in der Aufbereitungseinheit 30 voraus, um die Vorverzerrung an die Impulsantwort des Downlink-Kanals 2 anpassen zu können und somit den Empfang möglichst unverzerrter Signale an der ersten Mobilstation 11 zu realisieren.

Da im TDD-Betrieb kein Frequenzunterschied zwischen dem Uplink-Kanal 1 und dem Downlink-Kanal 2 besteht, kann die Messung der Impulsantwort des Uplink-Kanals 1 als Schätzung für die Impulsantwort des Downlink-Kanals 2 herangezogen werden. Voraussetzung für eine gute Schätzung der Impulsantwort des Downlink-Kanals 2 ist, daß sich die Impulsantwort des Downlink-Kanals 2 vom Zeitpunkt der Messung der Impulsantwort des Uplink-Kanals 1 aus den über den Uplink-Kanal 1 von der ersten Mobilstation 11 zur Basisstation 5 gesendeten Daten bis zum Zeitpunkt des Versendens der vorverzerrten Daten über den Downlink-Kanal 2 möglichst wenig verändert. Veränderungen der Impulsantwort des Downlink-Kanals 2 sind insbesondere von der Geschwindigkeit abhängig, mit der sich die erste Mobilstation 11 relativ zur Basisstation 5 bewegt. Je schneller sich die erste Mobilstation 11 relativ zur Basisstation 5 bewegt, desto schneller ändert sich die Impulsantwort des Downlink-Kanals 2 und umso häufiger müssen Messungen der Impulsantwort des Uplink-Kanals 1 vorgenommen werden, um die Vorverzerrung an die sich ändernde Impulsantwort des Downlink-Kanals 2 anzupassen und somit anhand der gemessenen Impulsantwort des Uplink-Kanals 1 eine gültige Schätzung der Impulsantwort des Downlink-Kanals 2 vorliegen zu haben.

Bei einem UMTS-Mobilfunksystem besteht nun das Problem, daß zwischen dem Aufbau bzw. der Konfiguration des Uplink-Kanals 1 und des Downlink-Kanals 2 und dem erstmaligen Versenden von Daten über den Uplink-Kanal 1 eine nicht näher spezifizierte Zeit verstreichen kann. Auch dann, wenn der Uplink-Kanal 1 und der Downlink-Kanal 2 konfiguriert sind, ist es nicht sichergestellt, daß regelmäßig Signale über den Uplink-Kanal 1 von der ersten Mobilstation 11 zur Basisstation 5 gesendet werden. Eine regelmäßige Übertragung von Daten bzw. Signalen über den Uplink-Kanal 1 von der ersten Mobilstation 11 zur Basisstation 5 ist zur Aktualisierung der Vorverzerrung und deren Anpassung an eine ggf. mit der Zeit sich ändernde Impulsantwort des Downlink-Kanals 2 unabdingbar, zumindest im Falle der Verwendung des JP-Verfahrens. Ansonsten paßt die Vorverzerrung mit der Impulsantwort des Downlink-Kanals 2 nicht zusammen und die Daten kommen verzerrt an der zweiten Empfangseinheit 50 an.

Überschreitet die Sendepause zwischen dem Versenden zweier Signale über den Uplink-Kanal 1 von der ersten Mobilstation 11 zur Basisstation 5 eine bestimmte Dauer, die von der Geschwindigkeit der ersten Mobilstation 11 relativ zur Basisstation 5 abhängig ist, so verliert die Messung der Impulsantwort des Uplink-Kanals 1 ihre Gültigkeit als brauchbare Schätzung der Impulsantwort für den Downlink-Kanal 2. Für die Nachführung der Vorverzerrung an eine sich mit der Zeit ändernde Impulsantwort des Downlink-Kanals 2 fehlen dann schlichtweg Meßwerte auf dem Uplink-Kanal 1.

Gemäß der Erfindung ist es nun vorgesehen, nach dem Verbindungsaufbau und der Konfigurierung des Uplink-Kanals 1 und des Downlink-Kanals 2 in regelmäßigen Abständen Meßsignale über den Uplink-Kanal 1 von der ersten Mobilstation 11 zur Basisstation 5 zu senden, auch wenn keine Nutz- oder Signalisierungsdaten von der ersten Mobilstation 11 zur Basisstation 5 zu übertragen sind, also z.B. in Sendepausen. Aus diesen von der ersten Empfangseinheit 20 empfangenen Meßsignalen kann dann die erste Auswerteeinheit 25 eine Messung der Impulsantwort des Uplink-Kanals 1 durchführen und erhält somit eine Schätzung der Impulsantwort des Downlink-Kanals 2, auf deren Grundlage eine an die Impulsantwort des Downlink-Kanals 2 angepaßte Aufbereitung der von der Basisstation 5 zur ersten Mobilstation 11 über den Downlink-Kanal 2 zu sendenden Daten durchgeführt werden kann. Diese Aufbereitung kann wie beschrieben durch Vorverzerrung in der Aufbereitungseinheit 30 und/oder durch Abstrahlung von mehreren Sendeantennen 21, 22 der Basisstation 5 erfolgen, die auch als Sendediversity-Antennenbetrieb bezeichnet wird.

Neben der Schätzung der Impulsantwort des Downlink-Kanals 2 durch Messen der Impulsantwort des Uplink-Kanals 1 kann auch die Messung anderer Eigenschaften des Uplink-Kanals 1 zur Schätzung dieser Eigenschaften für den Downlink-Kanal 2 herangezogen werden. Dazu gehören beispielsweise das Messen von Fadingeinflüssen auf die Übertragung der Meßsignale über den Uplink-Kanal 1, aus denen ein entsprechendes Fadingverhalten für die über den Downlink-Kanal 2 zu sendenden Daten in der ersten Auswerteeinheit 25 abgeleitet werden kann. Gegenüber dem Auftreten von Fading im Uplink-Kanal 1 kann die erste Auswerteeinheit 25 durch Anschaltung mehrerer Sendeantennen 21, 22 an die erste Sendeeinheit 40 reagieren, um die Fading-Einflüsse im Downlink-Kanal 2 durch Mehrwegeübertragung zu kompensieren. Dabei können für den beschriebenen Sendeantennendiversitybetrieb auch mehr als die beiden in Figur 1 dargestellten Sendeantennen 21, 22 der Basisstation 5 vorgesehen werden, die Anzahl der dann an die erste Sendeeinheit 40 anzuschaltenden Sendeantennen hängt dabei vom Grad der gemessenen Fading-Einflüsse im Uplink-Kanal 1 ab. Bei einer Aufbereitung der über den Downlink-Kanal 2 zu sendenden Daten durch Sendeantennendiversitybetrieb erfolgt dann eine Nachführung an sich ändernde in der ersten Auswerteeinheit 25 gemessene Fading-Eigenschaften des Uplink-Kanals 1 beispielsweise durch eine Änderung der Anzahl der für die Abstrahlung der über den Dowlink-Kanal 2 zu sendenden Daten verwendeten Sendeantennen der Basisstation 5.

Die zeitlichen Abstände zwischen dem regelmäßigen Aussenden der Meßsignale sollten dabei der ersten Mobilstation 11 von der Basisstation 5 anhand geeigneter Signalisierungsdaten mitgeteilt werden. Die erste Auswerteeinheit 25 kann zeitliche Änderungen von Eigenschaften des Uplink-Kanals 1, wie bspw. der Impulsantwort oder Fading-Einflüssen, erkennen und auf der Grundlage dieser detektierten zeitlichen Änderungen prüfen, welche zeitlichen Abstände zwischen dem regelmäßigen Aussenden der Meßsignale für eine Anpassung der Aufbereitung der über den Downlink-Kanal 2 zu sendenden Daten erforderlich ist, damit diese Aufbereitung möglichst gut der sich ändernden entsprechenden Eigenschaften des Downlink-Kanals 2 nachgeführt werden kann. Je schneller sich dabei die erste Mobilstation 11 relativ zur Basisstation 5 bewegt, desto schneller werden sich diese Eigenschaften des Uplink-Kanals 1 und damit auch die entsprechenden Eigenschaften des Downlink-Kanals 2 ändern. In diesem Fall wird die erste Auswerteeinheit 25 eine entsprechend starke zeitliche Änderung dieser Eigenschaften des Uplink-Kanals 1 feststellen und die erste Mobilstation 11 mittels entsprechender Signalisierungsdaten dazu auffordern, die zeitlichen Abstände zwischen dem regelmäßigen Aussenden der Meßsignale zu verkürzen, damit die Aufbereitung der über den Downlink-Kanal 2 zu sendenden Daten weiterhin möglichst gut an die sich mit der Zeit ändernden entsprechenden Eigenschaften des Downlink-Kanals 2 angepaßt werden kann.

Dadurch wird sichergestellt, daß der Basisstation 5 sowohl direkt nach Aufbau des Uplink-Kanals 1 und des Downlink-Kanals 2 als auch während der gesamten Verbindungsdauer stets eine gültige Schätzung der entsprechenden Eigenschaften, wie bspw. der Impulsantwort und /oder der Fading-Einflüsse des Downlink-Kanals 2 vorliegt, die eine möglichst zeitnahe Nachführung der Aufbereitung der über den Downlink-Kanal 2 zu sendenden Daten bezüglich dieser sich mit der Zeit ändernden Eigenschaften des Downlink-Kanals 2 ermöglicht.

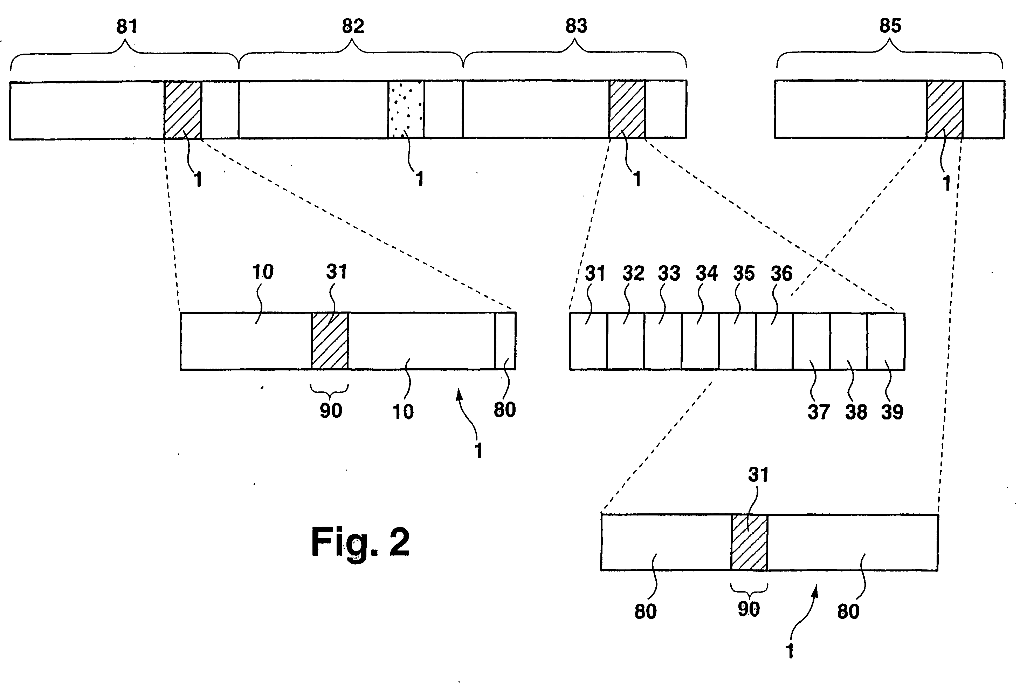

Aus der Veröffentlichung "Physical Channels and Mapping of Transport Channels onto Physical Channels", TS 25.221 vl.1.0, 3 GPP TSG RAN WG 1, 1999-06 ist die in Figur 2 gezeigte Struktur eines als Zeitschlitz ausgebildeten Uplink-Kanals 1 für den TDD-Betrieb bekannt. Sind Nutz- oder Signalisierungsdaten im Zeitschlitz 1 zu versenden, so werden diese um einen als "Midamble" bezeichneten Mittenbereich 90 herumgepackt und in dieser Form auf dem entsprechenden Funkkanal übertragen. Die Nutz- oder Signalisierungsdaten sind dabei in Figur 2 mit dem Bezugszeichen 10 gekennzeichnet. Die Midamble 90 dient auf der Empfängerseite der Messung mindestens einer Eigenschaft des entsprechenden Funkkanals, wobei mit der Midamble ein Meßsignal 31 übertragen wird, das beispielsweise als Bitfolge ausgebildet ist. Handelt es sich bei dem Funkkanal um den Uplink-Kanal 1, so dient die Midamble 90 mit dem Meßsignal 31 zur Messung mindestens einer Eigenschaft des Uplink-Kanals 1 in der Basisstation 5. Bei dieser mindestens einen Eigenschaft kann es sich wie beschrieben um Fadingeinflüsse auf dem Uplink-Kanal 1, um die Impulsantwort des Uplink-Kanals 1 oder dergleichen handeln.

Anhand des in der ersten Empfangseinheit 20 empfangenen Meßsignals 31 mißt die erste Auswerteeinheit 25 die mindestens eine Eigenschaft des Uplink-Kanals 1 und verwendet sie als Schätzung für eine entsprechende Eigenschaft des Downlink-Kanals 2, auf deren Grundlage sie eine Aufbereitung der über den Downlink-Kanal 2 an die erste Mobilstation 11 zu sendenden Daten in der beschriebenen Weise veranlaßt. Aus der genannten Veröffentlichung "Physical Channels and Mapping of Transport Channels onto Physical Channels" ist weiterhin bekannt, daß der Zeitschlitz 1 an einem Ende ein Schutzintervall 80 umfaßt, um eine zeitliche Überlappung mit einem benachbarten Zeitschlitz zu vermeiden.

Der Zeitschlitz 1 wird in mehreren aufeinanderfolgenden Rahmen 81, 82, 83, 85 als Uplink-Kanal für die Verbindung zwischen der ersten Mobilstation 11 und der Basisstation 5 reserviert. In einem ersten Rahmen 81 ist dabei der Zeitschlitz 1 wie beschrieben aufgebaut, d.h. die Midamble 90 ist von Nutz- oder Signalisierungsdaten 10 umschlossen und an einem Ende des Zeitschlitzes 1 ist das Schutzintervall 80 angeordnet. Fallen einer oder mehrere der Rahmen 81, 82, 83, 85 jedoch zeitlich in eine Sendepause der Verbindung zwischen der ersten Mobilstation 11 von der Basisstation 5, so werden in dem dieser Verbindung zugeordneten Zeitschlitz 1 keine Nutz- oder Signalisierungsdaten übertragen. Gemäß der Erfindung soll im einfachsten Fall die entsprechende Midamble 90 mit dem Meßsignal 31 in regelmäßigen Zeitabständen von der ersten Mobilstation 11 zur Basisstation 5 gesendet werden, auch dann, wenn keine Nutz- oder Signalisierungsdaten zu versenden sind und eine Sendepause vorliegt. Ein solcher Fall liegt beispielsweise beim n-ten Rahmen 85 vor, in dem dann der Zeitschlitz 1 nach wie vor die Midamble 90 mit dem Meßsignal 31 aufweist, die Midamble 90 jedoch auf beiden Seiten vom Schutzintervall 80 umschlossen ist, da keine Nutz- oder Signalisierungsdaten 10 zu übertragen sind. Dennoch wird auf diese Weise sichergestellt, daß in diesem n-ten Rahmen 85 das Meßsignal 31 von der ersten Mobilstation 11 zur Basisstation 5 übertragen wird, um eine Nachführung der Aufbereitung der über den Downlink-Kanal 2 zu sendenden Signale oder Daten an die mindestens eine aufgrund der Messung geschätzte Eigenschaft des Downlink-Kanals 2 anpassen zu können.

Anhand der auf diese Weise möglichen regelmäßigen Messung der mindestens einen Eigenschaft des Uplink-Kanals 1 kann die erste Auswerteeinheit 25 zeitliche Änderungen dieser mindestens einen Eigenschaft erkennen, die sich beispielsweise aus einer Bewegung der ersten Mobilstation 11 relativ zur Basisstation 5 ergeben. Je schneller eine solche Bewegung ist, desto schneller wird sich die mindestens eine gemessene Eigenschaft des Uplink-Kanals 1 ändern. Die erste Auswerteeinheit 25 benötigt dann in kürzeren Zeitabständen das Meßsignal 31, um die Aufbereitung der über den Downlink-Kanal 2 zu sendenden Daten möglichst zeitnah an die mindestens eine geschätzte Eigenschaft des Downlink-Kanals 2 anzupassen. Die erste Auswerteeinheit 25 wird daher in diesem Fall mittels Signalisierungsdaten, die beispielsweise ebenfalls über den Downlink-Kanal 2 an die erste Mobilstation 11 gesendet werden können, die erste Mobilstation 11 dazu auffordern, das Meßsignal 31 mit geringerem zeitlichen Abstand zu senden. Umgekehrt wird die erste Auswerteeinheit 25 in entsprechender Weise die erste Mobilstation 11 dazu auffordern, das Meßsignal 31 in längeren zeitlichen Abständen über den Uplink-Kanal 1 zur Basisstation 5 zu übertragen, wenn sie feststellt, daß sich die mindestens eine gemessene Eigenschaft des Uplink-Kanals 1 nicht oder nur wenig mit der Zeit ändert, um auf diese Weise Übertragungsbandbreite einzusparen.

Gemäß Figur 2 sind die Zeitschlitze 1, in denen das Meßsignal 31 mittels der Midamble 90 gesendet werden soll, schraffiert dargestellt. Diejenigen Zeitschlitze 1, in denen kein Meßsignal 31 übertragen werden soll, sind in Figur 2 punktiert dargestellt. Gemäß Figur 2 ist es somit vorgesehen, den Zeitschlitz 1 im ersten Rahmen 81, in einem dritten Rahmen 83 und im n-ten Rahmen 85 mit dem Meßsignal 31 zu übertragen. Dahingegen wird gemäß Figur 2 der Zeitschlitz 1 in einem zweiten Rahmen 82 ohne Meßsignal 31 übertragen. Das in Figur 2 dargestellte Beispiel soll also andeuten, daß der Zeitschlitz 1 in jedem zweiten Rahmen zur Übertragung des Meßsignals 31 genutzt werden soll. Erhöht sich die Geschwindigkeit der ersten Mobilstation 11 relativ zur Basisstation 5 im Lauf der Zeit, so kann die Basisstation 5 die erste Mobilstation 11 auffordern, beispielsweise den Zeitschlitz 1 in jedem der Rahmen 81, 82, 83, 85 zur Übertragung des Meßsignals 31 zu nutzen. Wird hingegen die Geschwindigkeit der ersten Mobilstation 11 bezüglich der Basisstation 5 langsamer, so kann die Basisstation 5 die erste Mobilstation 11 dazu auffordern, beispielsweise nur noch in jedem dritten Rahmen den Zeitschlitz 1 zur Übertragung des Meßsignals 31 zu nutzen.

n soll-in diesem Beispiel größer oder gleich fünf gewählt werden und stellt den letzten Rahmen dar, der für die Verbindung zwischen der ersten Mobilstation 11 und der Basisstation 5 aufgrund des eingehenden Rufes genutzt wird.

Die Rahmen zwischen dem dritten Rahmen 83 und dem n-ten Rahmen 85 sind in Figur 2 nicht dargestellt.

In dem für den n-ten Rahmen 85 beschriebenen Fall ist die Midamble 90 mit dem Meßsignal 31 an beiden Seiten jeweils vom Schutzintervall 80 umgeben, da keine Nutz- oder Signalisierungsdaten im Zeitschlitz 1 übertragen werden. Die Midamble 90 belegt dabei gemäß dem Beispiel nach Figur 2 ein Neuntel des Zeitschlitzes 1, so daß acht Neuntel des Zeitschlitzes 1 im n-ten Rahmen 85 ungenutzt bleiben. Gemäß der genannten Veröffentlichung "Physical Channels and Mapping of Transport Channels onto Physical Channels" kann die Midamble 90 auch etwa ein Fünftel eines Zeitschlitzes belegen, so daß etwa fünf Midambles in einem Zeitschlitz Platz fänden.

Es kann daher vorgesehen sein, die restliche, nicht von der Midamble 90 belegte Zeit des Zeitschlitzes 1 zur Übertragung weiterer Midambles mit jeweils einem Meßsignal zu nutzen, sofern mit diesem Zeitschlitz keine Nutz- oder Signalisierungsdaten übertragen werden. Der Zeitschlitz 1 kann dann von mehreren Mobilstationen genutzt werden, die jeweils ihr Meßsignal im zeitlichen Multiplex über diesen Zeitschlitz 1 übertragen, wie es anhand des Zeitschlitzes 1 für den dritten Rahmen 83 für das Multiplexen von neun Mobilstationen 11, 12, 13, ..., 19 gezeigt ist. Dabei kann jede der in Figur 3 dargestellten Mobilstationen 11, 12, 13, ..., 19 jeweils ein Meßsignal 31, 32, 33, ..., 39 über den Zeitschlitz 1 zeitmultiplex übertragen. Auf diese Weise wird die zur Verfügung stehende Bandbreite effektiver genutzt. Die Basisstation 5 muß dazu jeder der Mobilstationen 11, 12, 13, ..., 19 mitteilen, an welcher Stelle des Zeitschlitzes 1 sie ihr Meßsignal zu übertragen hat.

Es soll nun folgendes Beispiel angenommen werden: Acht der neun Mobilstationen 11, 12, 13, ..., 19 senden ihr Meßsignal in jedem Rahmen. Eine neunte Mobilstation 19 hingegen sendet ihr Meßsignal 39 nur in jedem zweiten Rahmen. Wenn nun wie in Figur 3 gestrichelt dargestellt noch eine zehnte Mobilstation 95 in der Funkzelle 60 angeordnet ist, die ebenfalls ihr Meßsignal nur in jedem zweiten Rahmen zur Basisstation 5 versendet, so können sich die neunte Mobilstation 19 und die zehnte Mobilstation 95 eine Midamble des Zeitschlitzes 1 für die Übertragung ihres jeweiligen Meßsignals teilen und diese Midamble jeweils abwechselnd zur Versendung ihres Meßsignals an die Basisstation 5 nutzen. Auf diese Weise wird die zur Verfügung stehende Bandbreite noch effektiver genutzt.

Generell kann eine Midamble von mehreren Mobilstationen abwechselnd genutzt werden, wenn diese Mobilstationen nicht in jedem Rahmen ihr Meßsignal zur Basisstation 5 senden.

Die erste Auswerteeinheit 25 teilt der ersten Mobilstation 11 mittels beispielsweise über den Downlinik-Kanal 2 übertragener Signalisierungsdaten mit, zu welchen Zeiten die erste Mobilstation 11 ihr Meßsignal 31 an die Basisstation 5 zu senden hat. Diese Information beinhaltet dabei in einem Zeitschlitzverfahren wie dem beispielhaft beschriebenen eine Information über den für die Versendung des Meßsignals 31 zu verwendenden Zeitschlitz 1. Weiterhin kann bei vorgesehener regelmäßiger Versendung des Meßsignals 31 vorgesehen sein, daß die Signalisierungsdaten eine Information über die zeitlichen Abstände für das Aussenden des Meßsignals 31 im zugewiesenen Zeitschlitz 1 umfassen. Eine regelmäßige Übertragung des Meßsignals 1 ist jedoch nicht unbedingt erforderlich. Vielmehr kann die Basisstation 5 mittels der zur ersten Mobilstation 11 zu übertragenden Signalisierungsdaten auch jeden einzelnen Zeitpunkt separat vorgeben, zu dem das Meßsignal 31 von der ersten Mobilstation 11 zur Basisstation 5 übertragen werden soll. Für das anhand des dritten Rahmens 83 optional vorgesehene zeitmultiplexe Übertragen von Meßsignalen mehrerer Mobilstationen im Zeitschlitz 1 können die Signalisierungdaten auch eine Information darüber enthalten, an welcher Stelle des für die Übertragung des Meßsignals 31 der ersten Mobilstation 11 vorgesehenen Zeitschlitzes 1 das Meßsignal 31 übertragen werden soll.

Entsprechende Signalisierungsdaten versendet die Basisstation 5 bei entsprechend bestehender Verbindung auch zu den anderen Mobilstationen 12, 13, 14, ..., 19, die in der Funkzelle 60 angeordnet sind, so daß auch diesen der Zeitpunkt für die Aussendung ihrer Meßsignale 32, 33, 34, ...,39 vorgegeben wird.

Anhand der ersten Mobilstation 11 wird nun die Auswertung dieser Signalisierungsdaten durch die zweite Auswerteeinheit 55 beschrieben. Die zweite Auswerteeinheit 55 ermittelt aus den Signalisierungsdaten die zur Versendung ihres Meßsignals 31 vorgesehene Zeit und veranlaßt die zweite Sendeeinheit 45, das Meßsignal 31 zu dieser Zeit an die Basisstation 5 über den Uplink-Kanal 1 zu versenden. Die zweite Auswerteeinheit 55 kann dabei aus den Signalisierungsdaten gegebenenfalls eine Information über den zu verwendenden Zeitschlitz 1 entnehmen und die zweite Sendeeinheit 45 veranlassen, das Meßsignal 31 in diesem Zeitschlitz 1 zu versenden. Ermittelt die zweite Auswerteeinheit 55 aus den Signalisierungsdaten, daß im Zeitschlitz 1 keine weiteren Meßsignale von weiteren Mobilstationen zu versenden sind, so überträgt sie das Meßsignal 31 mit der Midamble 90, an der beispielsweise gemäß der genannten Veröffentlichung "Physical Channels and Mapping of Transport Channels onto Physical Channels" vorgesehenen Stelle im Zeitschlitz 1.

Andernfalls ermittelt die zweite Auswerteeinheit 55 aus den Signalisierungsdaten, an welcher Stelle des für die Übertragung des Meßsignals 31 vorgesehenen Zeitschlitzes 1 das Meßsignal 31 übertragen werden soll. Fehlt diese Information in den Signalisierungsdaten, so geht die zweite Auswerteeinheit 55 automatisch davon aus, daß nur das Meßsignal 31 der ersten Mobilstation 11 im Zeitschlitz 1 übertragen wird.

Die zweite Auswerteeinheit 55 veranlaßt die zweite Sendeeinheit 45 zur Aussendung des Meßsignals 31 an der entsprechend vorgegebenen Stelle des für die Übertragung des Meßsignals 31 vorgesehenen Zeitschlitzes 1.

Ist eine regelmäßige Übertragung des Meßsignals 31 von der ersten Mobilstation 11 zur Basisstation 5 vorgesehen, so ermittelt die zweite Auswerteeinheit 55 aus den Signalisierungsdaten auch, in welchen zeitlichen Abständen das Meßsignal 31 im für die Übertragung des Meßsignals 31 vorgesehenen Zeitschlitz 1 übertragen werden soll und veranlaßt die zweite Sendeeinheit 45 zur entsprechenden Aussendung des Meßsignals 31 mit den vorgegebenen zeitlichen Abständen.

## Patentansprüche

1. Verfahren zur Messung mindestens einer Eigenschaft eines Übertragungskanals (1) von mindestens einer ersten Sende-/Empfangsstation (11, 12, 13, ..., 19, 95) zu einer zweiten Sende-/Empfangsstation (5), wobei von der zweiten Sende-/Empfangsstation (5) zur mindestens einen ersten Sende-/Empfangsstation (11, 12, 13, ..., 19, 95) zu sendende Daten in Abhängigkeit des Ergebnisses der Messung in der zweiten Sende-/Empfangsstation (5) derart aufbereitet werden, dass die Empfangsqualität beim Empfang dieser Daten an der mindestens einen ersten Sende-/Empfangsstation (11, 12, 13, ..., 19, 95) erhöht wird, wobei zu vorgegebenen Zeiten jeweils ein Messsignal (31, 32, 33,..., 39) über den Übertragungskanal (1) von der mindestens einen ersten Sende-/Empfangsstation (11, 12, 13, ..., 19, 95) zur zweiten Sende-/Empfangsstation (5) übertragen wird, anhand dessen die Messung der mindestens einen Eigenschaft des Übertragungskanals (1) in der zweiten Sende-/Empfangsstation (5) durchgeführt wird, **dadurch gekennzeichnet, dass** die Zeiten für die Übertragung der Messsignale (31, 32, 33,..., 39) derart vorgegeben werden, dass eine regelmäßige Übertragung von Messsignalen (31, 32, 33,..., 39) durchgeführt wird.

2. Verfahren nach Anspruch 1, **dadurch gekennzeichnet, dass** die Zeiten für die Übertragung der Messsignale (31, 32, 33,..., 39) der mindestens einen ersten Sende-/Empfangsstation (11, 12, 13, ..., 19, 95) von der zweiten Sende-/Empfangsstation (5) mitgeteilt werden.

3. Verfahren nach Anspruch 1 oder 2, **dadurch gekennzeichnet, dass** die Zeiten für die Übertragung der Messsignale (31, 32, 33,..., 39) in Abhängigkeit der zeitlichen Änderung der mindestens einen Eigenschaft des Übertragungskanals (1) vorgegeben werden.

4. Verfahren nach Anspruch 1, 2 oder 3, **dadurch gekennzeichnet, dass** die Zeiten für die Übertragung der Messsignale (31, 32, 33,..., 39) in Abhängigkeit einer Bewegung der mindestens einen ersten Sende-/Empfangsstation (11, 12, 13, ..., 19, 95) vorgegeben werden.

5. Verfahren nach Anspruch 4, **dadurch gekennzeichnet, dass** die Zeiten für die Übertragung der Messsignale (31, 32, 33,..., 39) bei schnellerer Bewegung der mindestens einen ersten Sende-/Empfangsstation (11, 12, 13, ..., 19, 95) in kürzeren zeitlichen Abständen vorgegeben werden.

6. Verfahren nach einem der vorherigen Ansprüche, **dadurch gekennzeichnet, dass** die zu sendenden Daten mittels Vorverzerrung, insbesondere nach einem Joint Predistortion Verfahren, aufbereitet werden.

7. Verfahren nach einem der vorherigen Ansprüche, **dadurch gekennzeichnet, dass** die zu sendenden Daten **dadurch** aufbereitet werden, dass sie über mehrere Antennen (21, 22), insbesondere nach einem Sendeantennendiversity-Betrieb, von der zweiten Sende-/Empfangsstation (5) abgestrahlt werden.

8. Verfahren nach einem der vorherigen Ansprüche, **dadurch gekennzeichnet, dass** der Übertragungskanal (1) als Zeitschlitz ausgebildet ist, bei dem das Messsignal (31) etwa in der Mitte des Zeitschlitzes umgeben von Nutz- oder Signalisierungsdaten (10) übertragen wird.

9. Verfahren nach Anspruch 8, **dadurch gekennzeichnet, dass** in mindestens einem Zeitschlitz (1), der vorzugsweise von Nutz- und Signalisierungsdaten (10) frei ist, Messsignale (31, 32, 33,..., 39) von mehreren ersten Sende-/Empfangsstationen (11, 12, 13, ..., 19, 95) zeitmultiplex zur zweiten Sende-/Empfangsstation (5) übertragen werden.

10. Sende-/Empfangsstation (5), insbesondere Basisstation eines Mobilfunknetzes, zur Durchfiihrung eines Verfahrens nach einem der vorherigen Ansprüche, wobei eine Empfangseinheit (20) vorgesehen ist, die zu vorgegebenen Zeiten jeweils ein Messsignal (31, 32, 33,..., 39) über mindestens einen Übertragungskanal (1) von mindestens einer weiteren Sende-/Empfangsstation (11, 12, 13, ..., 19, 95) empfängt, wobei eine Auswerteeinheit (25) vorgesehen ist, die eine Messung mindestens einer Eigenschaft des mindestens einen Übertragungskanals (1) durchführt, und wobei eine Aufbereitungseinheit (30) vorgesehen ist, die an die mindestens eine weitere Sende-/Empfangsstation (11, 12, 13, ..., 19, 95) zu sendende Daten in Abhängigkeit des Ergebnisses der Messung so aufbereitet, dass sie an der mindestens einen weiteren Sende-/Empfangsstation (11, 12, 13, ..., 19,95) mit erhöhter Empfangsqualität empfangbar sind, **dadurch gekennzeichnet, dass** die Zeiten für den Empfang der übertragenen Messsignale (31, 32, 33,..., 39) durch die Empfangseinheit (20) derart vorgegeben sind, dass ein regelmäßiger Empfang von Messsignalen (31, 32, 33,..., 39) durchgeführt wird.

11. Sende-/Empfangsstation (5) nach Anspruch 10, **dadurch gekennzeichnet, dass** die Sende-/Empfangsstation (5) der mindestens einen weiteren Sende-/Empfangsstation (11, 12, 13, ..., 19, 95) die Zeiten für die vorgesehene Übertragung der Messsignale (31, 32, 33,..., 39) mitteilt.

12. Sende-/Empfangsstation (5) nach Anspruch 10 oder 11, **dadurch gekennzeichnet, dass** die Sende-/Empfangsstation (5) die Zeiten für die Übertragung der Messsignale (31, 32, 33,..., 39) in Abhängigkeit der zeitlichen Änderung der mindestens einen Eigenschaft des mindestens einen Übertragungskanals (1) vorgibt.

13. Sende-/Empfangsstation (11, 12, 13, ..., 19, 95), insbesondere Mobilstation in einem Mobilfunknetz, zur Durchführung eines Verfahrens nach einem der Ansprüche 1 bis 9, wobei eine Sendeeinheit (45) vorgesehen ist, die zu vorgegebenen Zeiten jeweils ein Messsignal (31, 32, 33,..., 39) über einen Übertragungskanal (1) zu einer weiteren Sende-/Empfangsstation (5) überträgt, anhand dessen eine Messung mindestens einer Eigenschaft des Übertragungskanals (1) in der weiteren Sende-/Empfangsstation (5) durchführbar ist, **dadurch gekennzeichnet, dass** die Zeiten für die Übertragung der Messsignale (31, 32, 33,..., 39) durch die Sendeeinheit (45) derart vorgegeben sind, dass eine regelmäßige Übertragung von Messsignalen (31, 32, 33,..., 39) durchgeführt wird.

14. Sende-/Empfangsstation (11, 12, 13, ..., 19,95) nach Anspruch 13, **dadurch gekennzeichnet, dass** eine Empfangseinheit (50) vorgesehen ist, die Signalisierungsdaten von der weiteren Sende-/Empfangsstation (5) empfängt, dass eine Auswerteeinheit (55) vorgesehen ist, die aus den Signalisierungsdaten Informationen über die vorgegebenen Zeiten für die Versendung der Messsignale (31, 32, 33,..., 39) entnimmt und die die Sendeeinheit (45) veranlasst, zu diesen vorgegebenen Zeiten die Messsignale (31, 32, 33,..., 39) an die weitere Sende-/Empfangsstation (5) über den Übertragungskanal (1) abzusenden.

15. Sende-/Empfangsstation (11, 12, 13, ..., 19, 95) nach Anspruch 14, **dadurch gekennzeichnet, dass** der Übertragungskanal (1) für die Übertragung des Messsignals (31, 32, 33,..., 39) als Zeitschlitz ausgebildet ist und dass die Auswerteeinheit (55) anhand der Signalisierungsdaten diesen Zeitschlitz (1) ermittelt.

16. Sende-/Empfangseinheit (11, 12, 13, ..., 19,95) nach Anspruch 15, **dadurch gekennzeichnet, dass** die Auswerteeinheit (55) anhand der Signalisierungsdaten ermittelt, in welchen zeitlichen Abständen das Messsignal (31, 32, 33,..., 39) im für die Übertragung des Messsignals (31, 32, 33,..., 39) vorgesehenen Zeitschlitz (1) übertragen werden soll.

17. Sende-/Empfangsstation nach Anspruch 15 oder 16, **dadurch gekennzeichnet, dass** die Auswerteeinheit (55) anhand der Signalisierungsdaten ermittelt, an welcher Stelle des für die Übertragung des Messsignals (31, 32, 33,..., 39) vorgesehenen Zeitschlitzes (1) das Messsignal (31, 32, 33,..., 39) übertragen werden soll.

## Claims

1. Method for measuring at least one characteristic of a transmission channel (1) of at least a first transmitting/receiving station (11, 12, 13, ..., 19, 95) to a second transmitting/receiving station (5), wherein data which is to be transmitted from the second transmitting/receiving station (5) to the at least one first transmitting/receiving station (11, 12, 13, ..., 19, 95) is conditioned as a function of the result of the measurement in the second transmitting/receiving station (5) in such a way that the reception quality when this data is received at the at least one first transmitting/receiving station (11, 12, 13, ..., 19, 95) is increased, wherein in each case a measurement signal (31, 32, 33, ..., 39) is transmitted on the transmission channel (1) from the at least one first transmitting/receiving station (11, 12, 13, ..., 19, 95) to the second transmitting/receiving station (5) at predefined times, and the measurement of the at least one characteristic of the transmission channel (1) is carried in the second transmitting/receiving station (5) by means of said signal (31, 32, 33, ..., 39), **characterized in that** the times for the transmission of the measurement signals (31, 32, 33, ..., 39) are predefined in such a way that regular transmission of measurement signals (31, 32, 33, ..., 39) is carried out.

2. Method according to Claim 1, **characterized in that** the times for the transmission of the measurement signals (31, 32, 33, ..., 39) of the at least one first transmitting/receiving station (11, 12, 13, ..., 19, 95) are communicated by the second transmitting/receiving station (5).

3. Method according to Claim 1 or 2, **characterized in that** the times for the transmission of the measurement signals (31, 32, 33, ..., 39) are predefined as a function of the change in the at least one characteristic of the transmission channel (1) over time.

4. Method according to Claim 1, 2 or 3, **characterized in that** the times for the transmission of the measurement signals (31, 32, 33, ..., 39) are predefined as a function of a movement of the at least one first transmitting/receiving station (11, 12, 13, ..., 19, 95).

5. Method according to Claim 4, **characterized in that** the times for the transmission of the measurement signals (31, 32, 33, ..., 39) are predefined at shorter time intervals when the movement of the at least one first transmitting/receiving station (11, 12, 13, ..., 19, 95) is faster.

6. Method according to one of the preceding claims, **characterized in that** the data which is to be transmitted is preconditioned by preequalization, in particular according to a joint predistortion method.

7. Method according to one of the preceding claims, **characterized in that** the data which is to be transmitted is conditioned in such a way that it is emitted via the second transmitting/receiving station (5) by means of a plurality of antennas (21, 22), in particular according to a transmitter antenna diversity operating mode.

8. Method according to one of the preceding claims, **characterized in that** the transmission channel (1) is embodied as a time slot in which the measurement signal (31) is transmitted approximately in the centre of the time slot surrounded by useful or signalling data (10).

9. Method according to Claim 8, **characterized in that** measurement signals (31, 32, 33, ..., 39) are transmitted by a plurality of first transmitting/receiving stations (11, 12, 13, ..., 19, 95) to the second transmitting/receiving station (5) using time-division multiplexing in at least one time slot (1) which is preferably free of useful data and signalling data (10).

10. Transmitting/receiving station (5), in particular base station of a radio mobile network, for carrying out a method according to one of the preceding claims, wherein a receiving unit (20) is provided which receives in each case one measurement signal (31, 32, 33, ..., 39) on at least one transmission channel (1) from at least one other transmitting/receiving station (11, 12, 13, ..., 19, 95) at predefined times, wherein an evaluation unit (25) is provided which carries out a measurement of at least one characteristic of the at least one transmission channel (1), and wherein a conditioning unit (30) is provided which conditions, as a function of the result of the measurement, the data which is to be transmitted to at least one other transmitting/receiving station (11, 12, 13, ..., 19, 95) in such a way that it can be received with an increased reception quality at the at least one other transmitting/receiving station (11, 12, 13, ..., 19, 95), **characterized in that** the times for the reception of the transmitted measurement signals (31, 32, 33, ..., 39) are predefined by the receiving unit (20) in such a way that measurement signals (31, 32, 33, ..., 39) are received regularly.

11. Transmitting/receiving station (5) according to Claim 10, **characterized in that** the transmitting/receiving station (5) of the at least one other transmitting/receiving station (11, 12, 13, ..., 19, 95) communicates the times for the envisaged transmission of the measurement signals (31, 32, 33, ..., 39).

12. Transmitting/receiving station (5) according to Claim 10 or 11, **characterized in that** the transmitting/receiving station (5) predefines the times for the transmission of the measurement signals (31, 32, 33, ..., 39) as a function of the change in the at least one characteristic of the at least one transmission channel (1) over time.

13. Transmitting/receiving station (11, 12, 13, ..., 19, 95), in particular mobile station in a mobile radio network, for carrying out a method according to one of Claims 1 to 9, wherein a transmitting unit (45) is provided which transmits in each case one measurement signal (31, 32, 33, ..., 39) on a transmission channel (1) to one other transmitting/receiving station (5) at predefined times, it being possible to carry out a measurement of at least one characteristic of the transmission channel (1) in the other transmitting/receiving station (5) by means of said measurement signal (31, 32, 33, ..., 39), **characterized in that** the times for the transmission of the measurement signals (31, 32, 33, ..., 39) by the transmitting unit (45) are predefined in such a way that measurement signals (31, 32, 33, ..., 39) are transmitted regularly.

14. Transmitting/receiving station (11, 12, 13, ..., 19, 95) according to Claim 13, **characterized in that** a receiving unit (50) is provided which receives signalling data from the other transmitting/receiving station (5), **in that** an evaluation unit (55) is provided which extracts information about the predefined times for the transmission of the measurement signals (31, 32, 33, ..., 39) from the signalling data and which causes the transmitting unit (45) to output the measurement signals (31, 32, 33, ..., 39) to the other transmitting/receiving station (5) on the transmission channel (1) at these predefined times.

15. Transmitting/receiving station (11, 12, 13, ..., 19, 95) according to Claim 14, **characterized in that** the transmission channel (1) is designed to transmit the measurement signal (31, 32, 33, ..., 39) as a time slot, and **in that** the evaluation unit (55) determines this time slot (1) by means of the signalling data.

16. Transmitting/receiving unit (11, 12, 13, ..., 19, 95) according to Claim 15, **characterized in that** by means of the signalling data the evaluation unit (55) determines the time intervals at which the measurement signal (31, 32, 33, ..., 39) is to be transmitted in the time slot (1) which is provided for the transmission of the measurement signal (31, 32, 33, ..., 39).

17. Transmitting/receiving station according to Claim 15 or 16, **characterized in that** by means of the signalling data the evaluation unit (55) determines at which location in the time slot (1) provided for the transmission of the measurement signal (31, 32, 33, ..., 39) the measurement signal (31, 32, 33, ..., 39) is to be transmitted.

## Revendications

1. Procédé de mesure d'au moins une caractéristique d'un canal de transmission (1) d'au moins une première station d'émission/réception (11, 12, 13, ..., 19, 95) vers une seconde station d'émission/réception (5), selon lequel,
en fonction du résultat de la mesure dans la seconde station d'émission/réception (5) la seconde station d'émission/réception (5) prépare des données à envoyer vers au moins une première station d'émission/réception (11, 12, 13, ... , 19, 95) de façon à augmenter la qualité de réception de ces données au niveau de la première station d'émission/réception (11, 12, 13, ..., 19, 95),
à des instants prédéterminés, un signal de mesure respectif (31, 32, 33, ..., 39) est transmis par le canal de transmission (1) par l'au moins une première station d'émission/réception (11, 12, 13, ..., 19, 95) vers la seconde station d'émission/réception (5), et à l'aide de cette transmission, on effectue la mesure d'au moins une caractéristique du canal de transmission (1) dans la seconde station d'émission/réception (5),
**caractérisé en ce que**
les instants de transmission des signaux de mesure (31, 32, 33, ... , 39) sont prédéfinis pour avoir une transmission régulière de signaux de mesure (31, 32, 33, ..., 39).

2. Procédé selon la revendication 1,
**caractérisé en ce que**
les instants de transmission des signaux de mesure (31, 32, 33, ..., 39) d'au moins une première station d'émission/réception (11, 12, 13, ..., 19, 95) sont communiqués par la seconde station d'émission/réception (5).

3. Procédé selon l'une quelconque des revendications 1 ou 2,
**caractérisé en ce que**
les instants de transmission des signaux de mesure (31, 32, 33, ..., 39) sont prévus au moins en fonction de la variation dans le temps d'une caractéristique du canal de transmission (1).

4. Procédé selon l'une quelconque des revendications 1, 2 ou 3,
**caractérisé en ce que**
les instants de transmission des signaux de mesure (31, 32, 33, ..., 39) sont prédéfinis en fonction d'un mouvement de la première station d'émission/réception (11, 12, 13, ..., 19, 95).

5. Procédé selon la revendication 4,
**caractérisé en ce que**
pour des mouvements plus rapides de la première station d'émission/réception (11, 12, 13, ..., 19, 95) les instants de transmission des signaux de mesure (31, 32, 33, ..., 39) sont prédéfinis à des intervalles de temps plus courts.

6. Procédé selon l'une quelconque des revendications précédentes,
**caractérisé en ce que**
les données à émettre sont préparées par prédistorsion, notamment selon un procédé de prédistorsion Joint.

7. Procédé selon l'une quelconque des revendications précédentes,
**caractérisé en ce qu'**
on prépare les données à émettre de façon à pouvoir être rayonnées par plusieurs antennes (21, 22) notamment en mode d'émission d'antenne en mode diversité par la seconde station d'émission/réception (5).

8. Procédé selon l'une quelconque des revendications précédentes,
**caractérisé en ce que**
le canal de transmission (1) est en forme de fenêtre de temps et le signal de mesure (31) se situe sensiblement au milieu de la fenêtre de temps en étant entouré par des données utiles ou des données de signalisation (10).

9. Procédé selon la revendication 8,
**caractérisé en ce que**
dans au moins une fenêtre de temps (1) notamment sans données utiles de signalisation (10), les signaux de mesure (31, 32, 33, ..., 39) de plusieurs premières stations d'émission/réception (11, 12, 13, ..., 19, 95) sont transmises en multiplexage dans le temps vers la seconde station d'émission/réception (5).

10. Station d'émission/réception (5) notamment station de base d'un réseau de téléphone mobile pour la mise en oeuvre d'un procédé selon l'une quelconque des revendications précédentes, comportant une unité de réception (20) qui reçoit à des instants prédéfinis, au moins un signal de mesure (31, 32, 33, ..., 39) par au moins un canal de transmission (1) en provenance d'au moins une autre station d'émission/réception (11, 12, 13, ..., 19, 95),
une unité d'exploitation (25) étant prévue pour effectuer une mesure d'au moins une caractéristique d'au moins un canal de transmission (1), et avec une unité de traitement (30) qui prépare les données à envoyer vers au moins l'autre station d'émission/réception (11, 12, 13, ..., 19, 95) en fonction des résultats de la mesure de façon à être reçues avec une qualité de réception améliorée par cette autre station d'émission/réception (11, 12, 13, ..., 19, 95),
**caractérisée en ce que**
les instants pour la réception des signaux de mesure (31, 32, 33, ..., 39) transmis, par l'unité de réception (20) sont prévus pour avoir une réception régulière des signaux de mesure (31, 32, 33, ..., 39).

11. Station d'émission/réception (5) selon la revendication 10,
**caractérisée en ce qu'**
elle communique à l'au moins une autre station d'émission/réception (11, 12, 13, ..., 19, 95), les instants de la transmission prévus des signaux de mesure (31, 32, 33, ..., 39).

12. Station d'émission/réception (5) selon l'une quelconque des revendications 10 ou 11,
**caractérisée en ce que**
la station d'émission/réception (5) prédéfinit l'instant de la transmission des signaux de mesure (31, 32, 33, ..., 39) en fonction de la variation dans le temps d'au moins une caractéristique d'au moins un canal de transmission (1).

13. Station d'émission/réception (11, 12, 13, ..., 19, 95) notamment station mobile d'un réseau de téléphone mobile pour la mise en oeuvre d'un procédé selon l'une quelconque des revendications 1 à 9, selon lequel,
une unité d'émission (45) transmet à des instants prédéfinis, chaque fois par un canal de transmission (1) vers une autre station d'émission/réception (5) un signal de mesure (31, 32, 33, ..., 39) à l'aide duquel on effectue une mesure d'au moins une caractéristique du canal de transmission (1) dans l'autre station d'émission/réception (5),
**caractérisée en ce que**
les instants de transmission des signaux de mesure (31, 32, 33, ..., 39) par l'unité d'émission (45) sont prédéfinis pour avoir une transmission régulière de signaux de mesure (31, 32, 33, ..., 39).

14. Station d'émission/réception (11, 12, 13, ..., 19, 95) selon la revendication 13,
**caractérisée par**
une unité de réception (50) qui reçoit les données de signalisation de l'autre station d'émission/réception (5) ainsi qu'une unité d'exploitation (55) qui prélève dans les données de signalisation, les informations concernant les instants prédéfinis de l'émission des signaux de mesure (31, 32, 33, ..., 39) et qui sollicite l'unité d'émission (45) pour émettre aux instants prédéfinis, les signaux de mesure (31, 32, 33, ... , 39) vers l'autre station d'émission/réception (5) par le canal de transmission (1).

15. Station d'émission/réception (11. 12, 13, ... , 19, 95) selon la revendication 14,
**caractérisée en ce que**
le canal de transmission (1) est réalisé comme fenêtre de temps pour la transmission du signal de mesure (31, 32, 33, ..., 39), et
l'unité d'exploitation (55) détermine cette fenêtre de temps (1) à l'aide des données de signalisation.

16. Station d'émission/réception (11, 12, 13, ..., 19, 95) selon la revendication 15,
**caractérisée en ce que**
l'unité d'exploitation (55) détermine à l'aide des données de signalisation, les intervalles de temps dans lesquels le signal de mesure (31, 32, 33, ..., 39) doit transmettre dans la fenêtre de temps (1) prévue pour la transmission du signal de mesure (31, 32, 33, ..., 39).

17. Station d'émission/réception selon l'une quelconque des revendications 15 ou 16,
**caractérisée en ce qu'**
à l'aide des données de signalisation, l'unité d'exploitation (55) détermine à quel endroit de la fenêtre de temps (1) prévue pour la transmission du signal de mesure (31, 32, 33, ..., 39) il faut transmettre ce signal de mesure (31, 32, 33, ..., 39).
